# EUROPEAN PATENT SPECIFICATION

(11) **EP 3 053 501 B1**
(45) Date of publication and mention of the grant of the patent: **03.11.2021**
(21) Application number: 16153180.1
(22) Date of filing: 28.01.2016
(51) Int. Cl.: A47L 9/28, A47L 5/36

(54) **VACUUM CLEANER**
STAUBSAUGER
ASPIRATEUR

(30) Priority: 28.01.2015 KR 20150013290
(43) Date of publication of application: 10.08.2016
(73) Proprietor: LG Electronics Inc., Yeongdeungpo-gu Seoul 150-721 (KR)
(72) Inventor: HAM, Dukho, 08592 Seoul (KR); CHOI, Hoon, 08592 Seoul (KR); CHO, Seokhee, 08592 Seoul (KR)
(74) Representative: Morrall, Jonathan Ian McLachlan

(56) References cited:
- WO-A1-2010/045588
- GB-A- 2 433 424
- JP-A- 2006 122 463
- US-A1- 2007 061 997
- US-A1- 2014 055 099

## Description

### BACKGROUND

### 1. Field

A vacuum cleaner is disclosed herein.

### 2. Background

A vacuum cleaner is a device which suctions air containing dust using a suction force generated by a suction motor installed in a main body, and then filters the dust in the main body.

The vacuum cleaner is classified into a manual cleaner and an automatic cleaner. The manual cleaner is a cleaner with which a user directly performs cleaning, and the automatic cleaner is a cleaner which performs the cleaning while traveling by itself.

The manual cleaner may be classified into a canister type in which a suction nozzle is provided separately from the main body, and connected through a connection tube, and an upright type in which the suction nozzle is coupled to the main body.

In a related art document, Korean Patent Publication No. 10-2006-0118796 (published on November 24, 2006), there is disclosed a power cord withdrawing port of a cleaner.

In the related art document, a cord reel assembly is provided in a main body, and the main body may receive electric power by connecting the power cord to an electrical outlet.

In the related art document, since the cleaner receives the electric power through the cord reel assembly, the cleaner may be moved by a length of the cord wound on the cord reel assembly when cleaning is performed using the cleaner, and thus the cleaning is limited.

GB 2433424 A discloses a rechargeable vacuum cleaner comprising a main body, at least two sets of rechargeable batteries for driving a motor in the main body and a power-supply control unit.

JP 2006 122463 A discloses a vacuum cleaner with a battery for feeding electric power to an electric blower.

US 2014/0055099 A1 discloses a system, method, and computer program product for remedying a charging error. In use, a battery and battery charger are identified. An error associated with the charging of the battery by the battery charger is detected. The error is remedied.

### SUMMARY

The present disclosure is directed to a vacuum cleaner which is convenient to travel.

Also, the present disclosure is directed to a vacuum cleaner which enables a battery to be easily charged after the battery is discharged.

The invention is defined in independent claim 1. Further preferred embodiments are defined by the dependent claims.

There is provided a vacuum cleaner including a cleaner body having a suction motor which generates a suction force; a suction unit configured to be in communication with the cleaner body and to suction air and dust; a battery configured to supply electric power to the suction motor; a battery management system configured to detect a state of the battery; a second connector to which a first connector applying electric power for charging the battery is connected; and a controller configured to control charging of the battery, wherein the controller attempts the charging of the battery, when it is detected that the first connector is connected to the second connector, and reattempts the charging of the battery, when the charging of the battery is not normally performed.

The controller may further comprise a charging switch which allows or cuts off a flow of a charging current for charging the battery, and the charging switch may be switched on when the charging of the battery is attempted.

When the charging of the battery is not normally performed after the charging switch is switched on, the controller may switch off the charging switch, and then switch on the charging switch again, after a predetermined time passes.

The controller may further comprise a current detection unit which detects a current applied to the battery, and switch off the charging switch, when an average value or a value of the current detected by the current detection unit is less than a reference current value after the charging switch is switched on, and then switch on the charging switch again, after the predetermined time passes.

When the average value or the value of the current detected by the current detection unit is less than the reference current value, the controller may determine whether the battery is fully charged, and then finish the charging of the battery, when it is determined that the battery is fully charged.

The controller may switch off the charging switch, when it is determined that the battery is fully charged.

The controller may further comprise a voltage detection unit which detects a voltage of the battery, and the controller may determine whether the voltage detected by the voltage detection unit is a full charging voltage or more, when it is detected that the first connector is connected to the second connector, and the controller may attempt the charging of the battery, when the voltage detected by the voltage detection unit is the full charging voltage or more, and then determine whether the battery is normally charged.

The controller may further comprise a current detection unit which detects a current of the battery, and the controller may determine whether a value or an average value of the current detected by the current detection unit is a reference current value or less, when it is determined that the first connector is connected to the second connector, and the controller may attempt the charging of the battery, when the value or the average value of the current detected by the current detection unit is the reference current value or less, and then determine whether the battery is normally charged.

The controller may repeatedly attempt the charging of the battery until it is determined that the battery is normally charged.

The battery management system may comprise a switch which is switched off to protect the battery when the battery has a predetermined temperature or more, and a case in which the average value or the value of the current detected by the current detection unit is the reference current value or less may correspond to a case in which the switch is switched off.

When the switch is switched on, the controller may be able to determine as that the battery is normally charged.

The vacuum cleaner may further comprise a charger configured to apply a charging current to the battery and thus to charge the battery, and provided in the cleaner body; and a charging connector having the first connector and supplying commercial electric power to the second connector.

The vacuum cleaner may further comprise a charger configured to apply a charging current to the battery and having the first connector.

### BRIEF DESCRIPTION OF THE DRAWINGS

Embodiments will be described in detail with reference to the following drawings in which like reference numerals refer to like elements, and wherein:
FIG. 1 is a perspective view of a vacuum cleaner according to a first embodiment;
FIG. 2 is an exploded perspective of a main body of the vacuum cleaner according to the first embodiment;
FIG. 3 is a block diagram illustrating a configuration of the vacuum cleaner according to the first embodiment;
FIG. 4 is a flowchart illustrating a control method for charging a battery according to the first embodiment;
FIG. 5 is a flowchart illustrating a control method for charging the battery according to a second embodiment;
FIG. 6 is a flowchart illustrating a control method for charging the battery according to a third embodiment;
FIG. 7 is a block diagram illustrating a configuration of the vacuum cleaner according to a fourth embodiment; and
FIG. 8 is a block diagram illustrating a configuration of the vacuum cleaner according to a fifth embodiment.

### DETAILED DESCRIPTION

Reference will now be made in detail to embodiments, examples of which are illustrated in the accompanying drawings.

In the following detailed description of the preferred embodiments, reference is made to the accompanying drawings that form a part hereof, and in which is shown by way of illustration specific preferred embodiments in which the claimed subject-matter may be practiced. These embodiments are described in sufficient detail to enable those skilled in the art to practice the claimed subject-matter, and it is understood that other embodiments may be utilized and that logical structural, mechanical, electrical, and chemical changes may be made without departing from the scope of the claims. To avoid detail not necessary to enable those skilled in the art to practice the claimed subject-matter, the description may omit certain information known to those skilled in the art. The following detailed description is, therefore, not to be taken in a limiting sense.

Also, in the description of embodiments, terms such as first, second, A, B, (a), (b) or the like may be used herein when describing components. Each of these terminologies is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

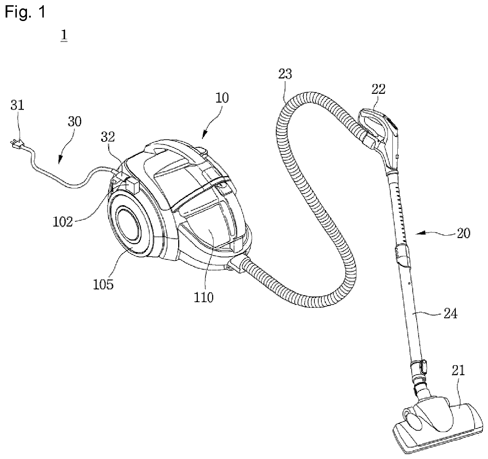

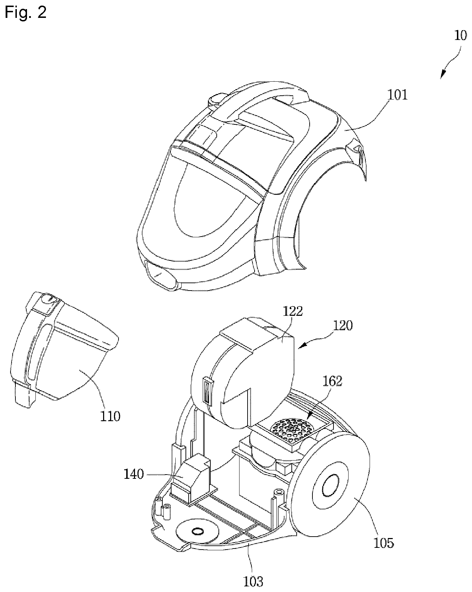

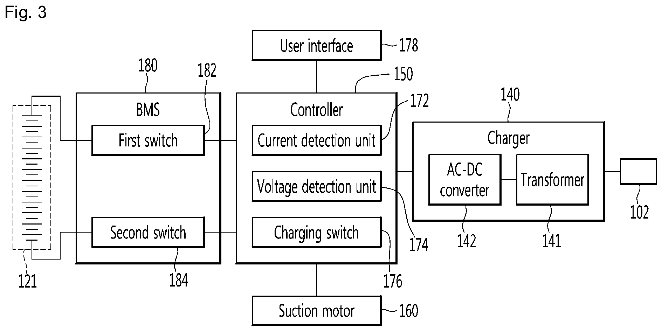

FIG. 1 is a perspective view of a vacuum cleaner according to a first embodiment, FIG. 2 is an exploded perspective of a main body of the vacuum cleaner according to the first embodiment, and FIG. 3 is a block diagram illustrating a configuration of the vacuum cleaner according to the first embodiment.

Referring to FIGS. 1 to 3, a vacuum cleaner 1 according to the embodiment may include a cleaner body 10 which has a suction motor 160 generating a suction force, and a suction device 20 which guides air containing dust into the cleaner body 10.

The suction device 20 may include a suction unit 21 which suctions the dust on a surface to be cleaned, for example, a floor surface, and connection units 22, 23 and 24 which connect the suction unit 21 to the cleaner body 10.

The connection units 22, 23 and 24 may include an extension tube 24 which is connected to the suction unit 21, a handle 22 which is connected to the extension tube 24, and a suction hose 23 which connects the handle 22 with the cleaner body 10.

The vacuum cleaner 1 may further include a dust separator (not shown) which separates the air suctioned into the suction device 20 from the dust, and a dust container 110 which stores the dust separated in the dust separator.

The dust container 110 may be separably installed at the cleaner body 10. The dust separator may be manufactured separately from the dust container 110, or may form one module with the dust container 110.

The vacuum cleaner 1 may further include a battery unit 120 which has a battery 121 supplying electric power for operating the suction motor 160, a charger 140 which charges the battery 121, and a charging connector 30 which is detachably connected to the cleaner body 10 and supplies commercial electric power to the cleaner body 10.

The battery unit 120 may include a housing 122 which protects the battery 121.

The charging connector 30 may include a plug 31 which is connected to an electrical outlet, and a first connector 32 which is connected to the cleaner body 10. The cleaner body 10 may include a second connector 102 (which may be referred to as a body connector) to which the first connector 32 is connected.

The cleaner body 10 may include a first body 101, and a second body 103 which is coupled to a lower side of the first body 101. A wheel 105 may be coupled to each of both sides of the second body 103.

The suction motor 160, the battery unit 120 and the charger 140 may be installed at the second body 103. The suction motor 160 may be protected by a motor housing 162. That is, the suction motor 160 may be accommodated in the motor housing 162.

At this time, for space efficiency, the battery unit 120 may be located at a lateral side of the motor housing 162, i.e., a lateral side of the suction motor 160, but is not limited thereto.

The suction motor 160 and the battery 121 may be located between a plurality of wheels 105. The battery unit 120 may be located between the suction motor 160 and one of the plurality of wheels 105, but is not limited thereto.

The charger 140 may be located at a position which is spaced apart from the battery unit 120.

As another example, the battery unit 120 may be provided at the suction unit 21. However, in this case, the connection units 22, 23 and 24 may serve to transfer the electric power of the battery 121 to the cleaner body 10. That is, an electric wire may be provided at the connection units 22, 23 and 24.

The dust container 110 may be separably coupled to the first body 101. The second connector 102 may be provided at the first body 101.

The battery 121 may include a plurality of battery cells. The plurality of battery cells may be secondary cells which are rechargeable and dischargeable. The plurality of battery cells may be connected in series.

A maximum charging voltage (the sum of voltages of the plurality of battery cells) which is chargeable to the battery 121 may exceed 42.4 V. For example, the maximum charging voltage of the battery 121 may be 84.8 V or more, and thus is less than a commercial voltage of 220 V.

The charger 140 may perform rectifying and smoothing, and may receive a commercial AC voltage, and then may convert the AC voltage into a DC voltage. The DC voltage converted by the charger 140 may be supplied to the battery 121. For example, the charger 140 may convert (forcibly reduce) the commercial AC voltage of 220 V into a DC voltage of more than 42.4 V.

The charger 140 may include a transformer 141 which transforms the input AC voltage, and an AC-DC converter 142 which converts the AC voltage output from the transformer 141 into the DC voltage. At this time, the DC voltage output from the AC-DC converter 142 may exceed 42.4 V.

As another example, the DC voltage output from the AC-DC converter 142 may be transformed by the transformer 141. In this case, the DC voltage output from the transformer 141 may exceed 42.4 V.

As still another example, the charger 140 may not have the transformer 141, and the AC-DC converter 142 may include a circuit for preventing the DC voltage from being converted into the AC voltage. That is, the AC-DC converter 142 may be an insulated converter. In the embodiment, since the AC-DC converter 142 may have a well-known configuration, a description thereof will be omitted.

In the embodiment, for example, the suction motor 160 may be a BLDC motor. And a maximum output of the suction motor 160 may be, for example, 400 W or more.

According to the embodiment, since the DC voltage of more than 42.4 V may be output from the charger 140, and the maximum charging voltage of the battery 121 may be 84.8 V or more, the suction motor 160 may generate a larger output, and thus the suction force of the vacuum cleaner 1 may be increased, and cleaning performance may be enhanced.

Also, since the charging connector 30 may be connected to the vacuum cleaner 1 only when the battery 121 is charged, and the charging connector 30 may be separated from the vacuum cleaner 1 when the cleaning is performed using the vacuum cleaner 1, a travel degree of freedom of the vacuum cleaner 1 may be enhanced.

That is, since the vacuum cleaner 1 receives the electric power from the battery 121 without a separate cord reel on which the electric wire is wound, a travel range of the vacuum cleaner 1 is not limited, and also since it is not necessary to cross the electric wire or to remove the electric wire while the vacuum cleaner 1 is traveling, it is easy to travel.

Also, in the embodiment, since the battery 121 is electrically connected to the second connector 102, and the maximum charging voltage of the battery 121 may be 84.8 V or more, when the transformer 141 is not provided, a user may be in danger by being in contact with the second connector 102. However, in the present embodiment, since the charger 140 includes the transformer 141, the transformer 141 serves as an insulator, and user safety may be enhanced.

The vacuum cleaner 1 may further include a battery management system (BMS) 180. The BMS 180 may detect a state of each of the plurality of battery cells, and then may transmit the state to a controller 150.

For example, the BMS 180 may detect a voltage of each of the plurality of battery cells.

Also, the BMS 180 may enable the voltage among the plurality of battery cells to be uniformly maintained when each of the plurality of battery cells is charged or discharged. That is, the BMS 180 may manage discharging of each of the plurality of battery cells so that the electric power is supplied from each of the plurality of battery cells to the suction motor 160.

The BMS 180 may include a first switch 182 and a second switch 184. The first switch 182 may be switched off when the battery 121 has a reference temperature or more. The reason why the first switch 182 is switched off is to prevent the charging from being performed when the battery 121 has the reference temperature or more, and thus to protect the battery 121. In the specification, a state in which the first switch 182 is switched off may be referred to as a battery protection mode.

When the first switch 182 is switched off, the charging of the battery 121 is not performed. When the battery 121 has a temperature less than the reference temperature, the first switch 182 may be switched on, and the battery 121 may be charged while the first switch 182 is switched on.

The second switch 184 may be switched off, when the battery 121 has the reference temperature or more during the discharging of the battery 121.

The controller 150 may control the suction motor 160, and may control an operation of the suction motor 160 according to the voltage of the battery 121.

The controller 150 may include a current detection unit 172 which detects a current. Also, the controller 150 may further include a voltage detection unit 174 which detects a voltage.

The controller 150 may determine whether the battery 121 is fully charged based on one or more of the current detected by the current detection unit 172 and the voltage detected by the voltage detection unit 174. The full charging of the battery 121 means that the charging of the battery 121 is completed.

Also, the controller 150 may further include a charging switch 176. The charging switch 176 may be switched on to charge the battery 121. And the charging switch 176 may be switched off, when the battery 121 is fully charged.

Meanwhile, the vacuum cleaner 1 may further include a user interface 178. The user interface 178 may receive an operation command of the vacuum cleaner 1, and may also display operation information or state information of the vacuum cleaner 1.

The user interface 178 may be provided at one or more of the handle 22 and the cleaner body 10. The user interface 178 may include an input unit and a display unit which are formed integrally with or separately from each other. The user interface 178 may include a notice unit from which a sound is output.

Power-on of the vacuum cleaner 1, a cleaning mode, an intensity of the suction force and so on may be selected through the input unit. The display unit may display at least residual information of the battery 121.

For example, the intensity of the suction force may be gradually set to a maximum state (having a maximum suction force), a middle state and a minimum state (having a minimum suction force). The intensity of the suction force of the suction motor 160 may be selected through the input unit. The specification has described that the intensity of the suction force is controlled in three stages. However, the number of stages which classifies the intensity of the suction force is not limited.

When a residual value of the battery 121 reaches a reference voltage, the controller 150 may control the display unit to display information notifying that it is necessary to charge the battery 121. The reference voltage may be stored in a memory which is not illustrated.

As another example, the display unit may continuously or gradually display the residual value of the battery 121. For example, the display unit may display the residual value of the battery 121 in figures, by symbols or in the form of a graph. Alternatively, the display unit may include a plurality of light emitting parts, and may display the residual value of the battery 121 by changing the number of light emitting parts which are turned on. Alternatively, the display unit may display the residual value of the battery 121 by changing a color of light emitted from the light emitting parts.

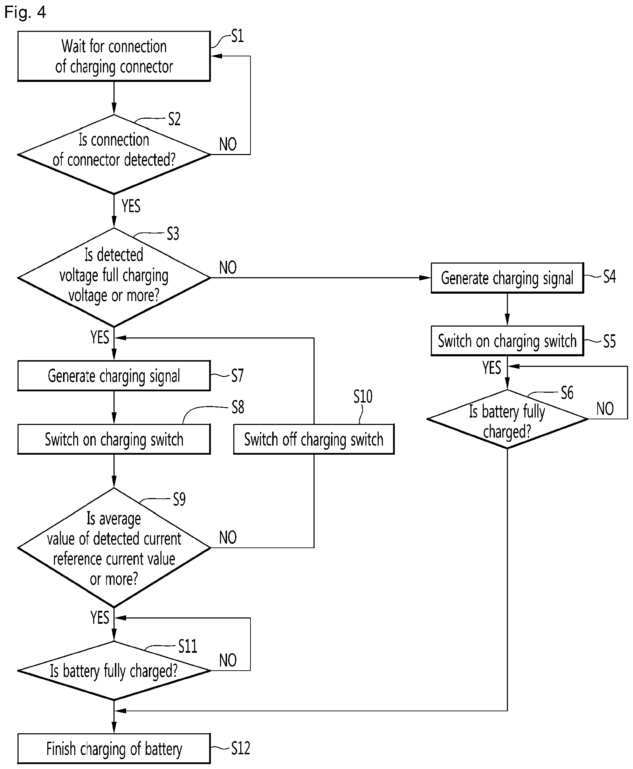

FIG. 4 is a flowchart illustrating a control method for charging the battery according to the first embodiment.

Referring to FIGS. 1 to 4, the user may perform the cleaning using the cleaner body 10. After the cleaning is completed, the battery 121 may be charged.

The user may perform the cleaning in a state in which the charging connector 30 is detached from the cleaner body 10. To charge the battery 121, the user may connect the charging connector 30 to the cleaner body 10. That is, the cleaner body 10 is waiting for connection of the charging connector 30 (S1).

The controller 150 may determine whether the charging connector 30 is connected to the cleaner body 10 (S2). Of course, the plug 31 of the charging connector 30 may be in a connected state to the electric outlet.

At a moment when the charging connector 30 is connected to the cleaner body 10, the current detected by the current detection unit 172 is varied, and the controller 150 may determine or detect whether the charging connector 30 is connected based on a change in the current detected by the current detection unit 172. However, in the specification, a method for determining whether the charging connector 30 is connected is not limited thereto.

As a result determined in the operation S2, when it is determined that the charging connector 30 is connected to the cleaner body 10, the controller 150 determines whether the voltage detected by the voltage detection unit 174 is a full charging voltage or more (S3).

When the first switch 182 of the BMS 180 is switched off, the charging of the battery 121 may not be performed, and a commercial voltage applied to the charger 140 may be detected by the voltage detection unit 174. At this time, the commercial voltage is higher than the full charging voltage of the battery 121. Alternatively, while the battery 121 is in a fully charged state, the user may connect again the charging connector 30 to the cleaner body 10. In this case, the voltage detected by the voltage detection unit 174 may be substantially the same as the full charging voltage.

However, when the first switch 182 of the BMS 180 is in an ON state, the voltage detection unit 174 may detect a voltage less than the full charging voltage, and the charging of the battery 121 may be performed.

Therefore, in the specification, the operation S3 may be referred to as an operation of determining whether the battery is chargeable, or an operation of determining the battery protection mode.

As a result determined in the operation S3, when the voltage detected by the voltage detection unit 174 is less than the full charging voltage, a charging signal for charging the battery 121 is generated from the controller 150 (S4). Then, the charging switch 176 may be switched on.

When the charging switch 176 is switched on, a current for the charging may be applied to the battery 121, and the charging of the battery 121 may be performed.

While the charging of the battery 121 is being performed, the controller 150 determines whether the battery is fully charged (S6). For example, the controller 150 may determine whether the voltage detected by the voltage detection unit 174 reaches the full charging voltage.

Alternatively, the controller 150 may determine whether the current detected by the current detection unit 172 is a full charging reference current or less. For example, while the charging of the battery 121 is being performed, a current value detected by the current detection unit 172 may be a first current value. When the battery 121 is fully charged, the current value detected by the current detection unit 172 may be a second current value, and the second current value may be smaller than the first current value. That is, when the battery 121 is fully charged, the current value detected by the current detection unit 172 is reduced.

Alternatively, the controller 150 may determine whether the battery 121 is fully charged based on the voltage detected by the voltage detection unit 174 and the current detected by the current detection unit 172.

As a result detected in the operation S6, when it is determined that the battery 121 is fully charged, the controller 150 may finish the charging of the battery 121 (S12). For example, the controller 150 may switch off the charging switch 176.

When the charging of the battery 121 is completed, information notifying that the charging is completed may be generated from the user interface 178.

Meanwhile, as the result determined in the operation S3, when the voltage detected by the voltage detection unit 174 is the full charging voltage or more, the charging signal for charging the battery 121 is generated from the controller 150 (S7). Then, the charging switch 176 may be switched on (S8).

Then, the controller 150 determines whether an average value of the current detected for a predetermined period of time by the current detection unit 172 is a reference current value or more (S9).

If the first switch 182 of the BMS 180 is in an OFF state, a charging current is not applied to the battery 121 even though the charging switch 176 is switched on, and thus the current detected by the current detection unit 172 may be 0.

That is, when the first switch 182 of the BMS 180 is in the OFF state, the average value of the current detected for the predetermined period of time by the current detection unit 172 is less than the reference current value.

In the embodiment, the operation S9 may be referred to as an operation of determining whether the first switch is switched on, or an operation of determining whether the battery protection mode is released.

Therefore, as a result determined in the operation S9, when the average value of the current detected for the predetermined period of time by the current detection unit 172 is less than the reference current value, the controller 150 switches off the charging switch 176.

After a predetermined time passes from when the charging switch 176 is switched off, the controller 150 may generate the charging signal again, and may switch on the charging switch 176.

The first switch 182 may be switched on, when the temperature of the battery 121 is less than the reference temperature. As described above, when the first switch 182 is switched on, the battery 121 may be chargeable.

And since the charging current is applied to the battery 121 when the first switch 182 is switched on, the average value of the current detected by the current detection unit 172 is the reference current value or more.

As the result determined in the operation S9, when the average value of the current detected for the predetermined period of time by the current detection unit 172 is the reference current value or more, the battery 121 is being charged, and thus the controller 150 determines whether the battery 121 is fully charged (S11). A determination method in the operation S11 may be the same as or different from that in the operation S6.

And as a result determined in the operation S11, when it is determined that the battery 121 is fully charged, the controller 150 may finish the charging of the battery 121 (S12). For example, the controller 150 may switch off the charging switch 176.

When the charging of the battery 121 is completed, the information notifying that the charging is completed may be generated from the user interface 178.

According to the embodiment, when the connection of the charging connector 30 is detected, the charging is attempted, and it may be determined whether the charging will be reattempted based on the current value detected by the current detection unit 172. That is, when the charging is primarily attempted, and then the battery 121 is not charged, the charging of the battery 121 may be reattempted. At this time, reattempt times may be one or more.

The embodiment has the following effects.

If the operation S3 and the operations S7 to S10 are not implemented in the embodiment, i.e., when the connection of the charging connector 30 is detected, and the charging signal is generated to switch on the charging switch 176, and then it is determined whether the charging of the battery is completed based on the result detected by the voltage detection unit 174, it is determined that the battery 121 is fully charged, while the first switch 182 is in the OFF state, and thus the charging of the battery 121 is not performed.

In this case, the user recognizes a fact that the charging of the battery 121 is being performed or the charging of the battery 121 is completed, but the charging of the battery 121 is not actually performed, and thus the user may misunderstand that the vacuum cleaner is broken down.

In this state, to charge the battery 121, the user may separate the charging connector 30 from the cleaner body 10, and then may connect again the charging connector 30. Even in this case, it is impossible to charge the battery 121, as long as the first switch 182 is in the OFF state.

However, according to the embodiment, even when it is determined that the voltage detected by the voltage detection unit 174 is greater than the full charging voltage, the charging signal is generated, and the charging switch 176 is switched on, and the charging is attempted several times. Therefore, even when the charging connector 30 is connected to the cleaner body 10 while the first switch 182 is in the OFF state, it is possible to charge the battery 121.

That is, after the charging connector 30 is connected to the cleaner body 10 while the first switch 182 is in the OFF state, when the charging signal is generated, and the charging switch 176 is switched on to attempt the charging, it is possible to charge the battery 121 if the first switch 182 is in the ON state.

Therefore, according to the embodiment, in a state in which the charging connector 30 is connected to the cleaner body 10, it is possible to charge the battery 121, regardless of the ON/OFF state of the first switch 182.

When the user interface 178 is configured to discriminately display whether the battery 121 is being charged and whether the charging is completed, the battery 121 is not actually charged even when the operations S7 to S10 are being performed, but the user interface 178 may generate information notifying that the battery 121 is being charged.

The above-described embodiment has described that, when the connection of the charging connector 30 is detected, it is determined whether the detected voltage is the full charging voltage or more. However, unlike this, the operations S3 to S6 may be omitted.

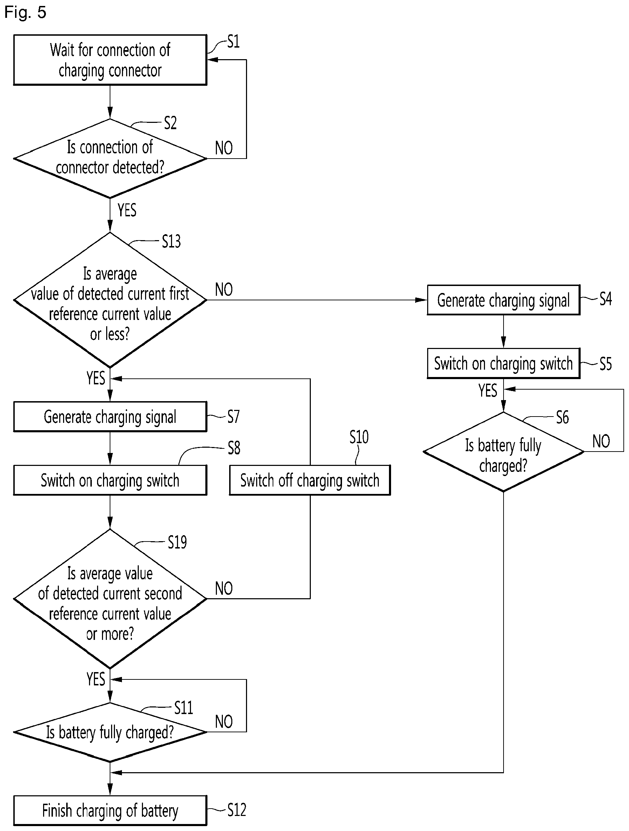

FIG. 5 is a flowchart illustrating a control method for charging the battery according to a second embodiment.

The embodiment is the same as the first embodiment, except the operation of determining the battery protection mode and the operation of determining whether the battery protection mode is released. Therefore, hereinafter, only characteristic parts of the embodiment will be described.

Referring to FIGS. 3 and 5, when it is determined that charging connector 30 is connected to the cleaner body 10, the controller 150 may determine whether the average value of the current detected by the current detection unit 172 is the first reference current value or less (S13).

When the first switch 182 is in the OFF state, the current detected by the current detection unit 172 may be 0. Accordingly, the average value of the current detected by the current detection unit 172 is smaller than a first reference current value.

However, when the first switch 182 is in the ON state, the average value of the current detected by the current detection unit 172 is greater than the first reference current value.

In the embodiment, as a result determined in the operation S13, when the average value of the current detected by the current detection unit 172 is the first reference current value or less, it is determined as the battery protection mode, and the charging signal for charging the battery 121 is generated from the controller 150 (S7). Then, the charging switch 176 may be switched on (S8).

According to the embodiment, since the average value of the current is compared with the first reference current value, an error in determination due to a sensing error of the detected current may be reduced.

Then, the controller 150 determines whether the average value of the current detected for a predetermined period of time by the current detection unit 172 is a second reference current value or more (S19). At this time, the first reference current value and the second reference current value may be the same as or different from each other.

Therefore, as a result determined in the operation S19, when the average value of the current detected for the predetermined period of time by the current detection unit 172 is less than the second reference current value, the controller 150 switches off the charging switch 176 (S10).

However, as the result determined in the operation S19, when the average value of the current detected for the predetermined period of time by the current detection unit 172 is the second reference current value or more, the operation S11 and the operation S12 may be performed.

Also, as the result determined in the operation S13, when the average value of the current detected by the current detection unit 172 is greater than the first reference current value, the operations S4 to S6 and the operation S12 may be performed.

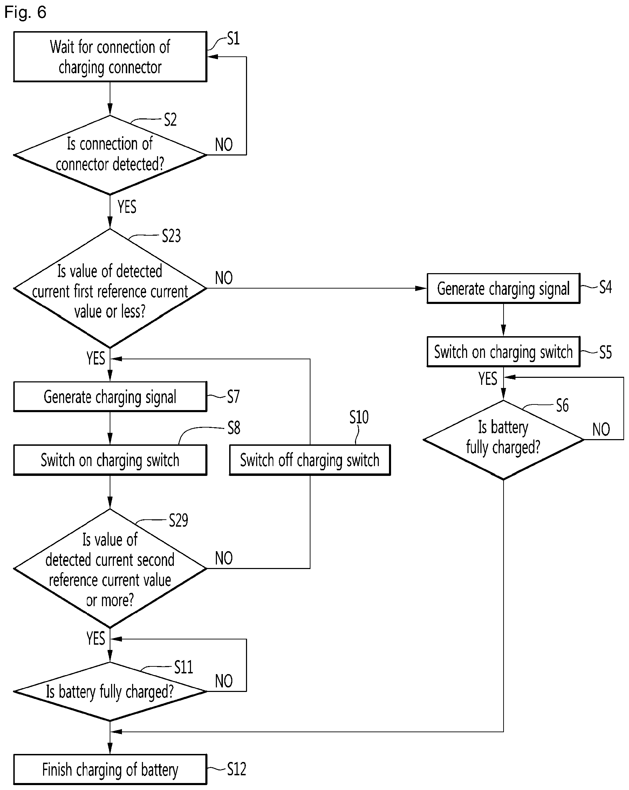

FIG. 6 is a flowchart illustrating a control method for charging the battery according to a third embodiment.

The embodiment is the same as the first embodiment, except the operation of determining the battery protection mode and the operation of determining whether the battery protection mode is released. Therefore, hereinafter, only characteristic parts of the embodiment will be described.

Referring to FIGS. 3 and 6, when it is determined that the charging connector 30 is connected to the cleaner body 10, the controller 150 may determine whether a value of the current detected by the current detection unit 172 is the first reference current value or less (S23).

When the first switch 182 is in the OFF state, the current detected by the current detection unit 172 may be 0. Accordingly, the value of the current detected by the current detection unit 172 is smaller than the first reference current value.

However, when the first switch 182 is in the ON state, a value of the current detected by the current detection unit 172 is greater than the first reference current value.

In the embodiment, as a result determined in the operation S23, when the value of the current detected by the current detection unit 172 is the first reference current value or less, it is determined as the battery protection mode, and the charging signal for charging the battery 121 is generated from the controller 150 (S7). Then, the charging switch 176 may be switched on (S8).

Then, the controller 150 determines whether the value of the current detected by the current detection unit 172 is a second reference current value or more (S29). At this time, the first reference current value and the second reference current value may be the same as or different from each other.

Therefore, as a result determined in the operation S29, when the value of the current detected by the current detection unit 172 is less than the second reference current value, the controller 150 switches off the charging switch 176 (S10).

However, as the result determined in the operation S29, when the value of the current detected by the current detection unit 172 is the second reference current value or more, the operation S11 and the operation S12 may be performed.

Also, as the result determined in the operation S23, when the value of the current detected by the current detection unit 172 is greater than the first reference current value, the operations S4 to S6 and the operation S12 may be performed.

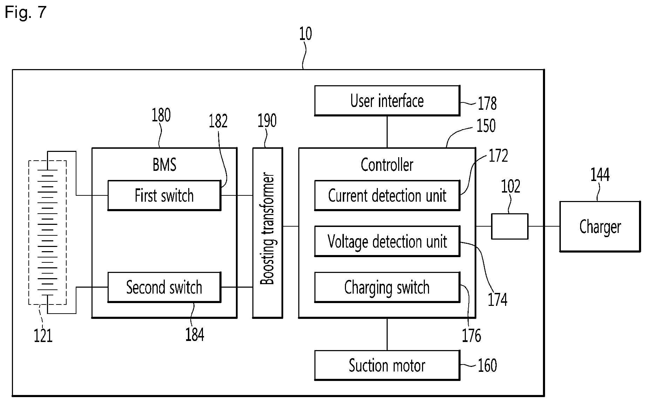

FIG. 7 is a block diagram illustrating a configuration of the vacuum cleaner according to a fourth embodiment.

The embodiment is the same as one or more of the first to third embodiments, except that a charger is detachably connected to the vacuum cleaner. Therefore, hereinafter, only characteristic parts of the embodiment will be described.

Referring to FIG. 7, a charger 144 may be detachably connected to the cleaner body 10 according to the embodiment.

The charger 144 may include a power cord which is connected to an electric outlet, and a charger connector (not shown and referred to as a first connector) which is connected the second connector 102 of the cleaner body 10.

The charger 144 may perform rectifying and smoothing, and may receive a commercial AC voltage, and then may convert the AC voltage into a DC voltage. The charger 144 may supply the converted DC voltage to the cleaner body 10. For example, the charger 144 may convert a commercial AC voltage of 220 V into a DC voltage of 42.4 V or less, and then may supply the DC voltage to the cleaner body 10.

In the embodiment, to operate the high-power suction motor 160 using the voltage charged in the battery 121, the cleaner body 10 may further include a boosting transformer 190 which receives the DC voltage of 42.4 V or less from the charger 144 and boosts the DC voltage.

For example, the boosting transformer 190 may be a boost converter, but the embodiment does not limit a configuration of the boosting transformer 190.

In the embodiment, the DC voltage of 42.4 V or less input to the boosting transformer 190 may be boosted twice or more so that the battery 121 is charged with a voltage of 84.8 V or more.

The boosting transformer 190 may include an inductor, a diode, a capacitor and a switching element. The switching element is repeatedly switched on and off at high speed by the controller 150 so that the boosting transformer 190 boosts the input voltage.

At this time, the switching element may be configured with a MOSFET, but is not limited thereto. The switching element may be configured with a bipolar junction transistor (BJT), an insulated gate bipolar transistor (IGBT) or the like.

Meanwhile, one of the methods for charging the battery according to the first to third embodiments may be applied to the embodiment. However, the operation S2 may be changed into detecting of the connection of the charger (the connection of the first connector), instead of the detecting of the connection of the charging connector.

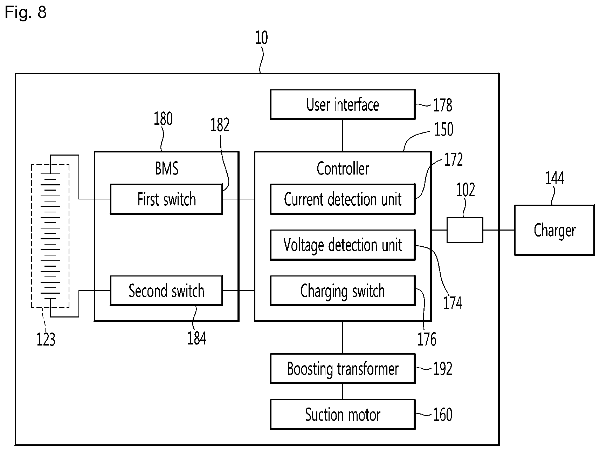

FIG. 8 is a block diagram illustrating a configuration of the vacuum cleaner according to a fifth embodiment.

The embodiment is the same as the fourth embodiment, except a position of the boosting transformer and a full charging voltage of the battery. Therefore, hereinafter, only characteristic parts of the embodiment will be described.

Referring to FIG. 8, for example, a maximum charging voltage of a battery 123 may be 42.4 V or less.

To operate the high-power suction motor 160 using the battery 123 of the embodiment, a boosting transformer 192 which boosts a voltage of the battery 123 may be provided at the cleaner body 10.

For example, the boosting transformer 192 may be a boost converter, but the embodiment does not limit a configuration of the boosting transformer 192.

Therefore, according to the embodiment, the DC voltage of 42.4 V or less output from the battery 123 may be boosted by the boosting transformer 192, and then may be supplied to the suction motor 160.

At this time, the boosting transformer 192 may boost an output voltage of the battery 123 twice or more. For example, the boosting transformer 192 may output a DC voltage of 84.8 V or more. Since the boosting transformer 192 can output the DC voltage of 84.8 V or more, a current necessary to operate the suction motor 160 may be reduced, and a configuration of a circuit necessary to operate the suction motor 160 may be simplified.

Meanwhile, one of the methods for charging the battery according to the first to third embodiments may be applied to the embodiment. However, the operation S2 may be changed into detecting of the connection of the charger, instead of the detecting of the connection of the charging connector.

The above-described embodiments have described an example in which the vacuum cleaner is a canister type cleaner. However, the claimed subject-matter may also be applied to an upright type cleaner. At this time, the battery which supplies the electric power to the suction motor may be provided at the suction unit or the cleaner body. The above-described charger may also be provided at the suction unit or the cleaner body. And the charging connector may be connected to the suction unit or the cleaner body.

Even though all the elements of the embodiments are coupled into one or operated in the combined state, the present disclosure is not limited to such an embodiment. That is, all the elements may be selectively combined with each other without departing from the scope of the claims. Furthermore, when it is described that one comprises (or includes or has) some elements, it should be understood that it may comprise (or include or have) only those elements, or it may comprise (or include or have) other elements as well as those elements if there is no specific limitation. Unless otherwise specifically defined herein, all terms comprising technical or scientific terms are to be given meanings understood by those skilled in the art. Like terms defined in dictionaries, generally used terms needs to be construed as meaning used in technical contexts and are not construed as ideal or excessively formal meanings unless otherwise clearly defined herein.

Although embodiments have been described with reference to a number of illustrative embodiments thereof, it will be understood by those skilled in the art that various changes in form and details may be made therein without departing from the scope of the claims. Therefore, the preferred embodiments should be considered in a descriptive sense only and not for purposes of limitation, and also the scope of the claims is not limited to the embodiments. Furthermore, the claimed subject-matter is defined not by the detailed description but by the appended claims, and all differences within the scope will be construed as being comprised in the present disclosure.

## Claims

1. A vacuum cleaner comprising:
a cleaner body (10) having a suction motor arranged to generate a suction force;
a suction unit (21) configured to be in communication with the cleaner body (10) and to receive air and dust;
a battery (121) configured to supply electric power to the suction motor (160);
a battery management system (180) configured to detect a state of the battery (121);
a second connector (102) arranged to receive a first connector (32) for supplying electric power for charging the battery (121); and
a controller (150) configured to control charging of the battery (121),
**characterized in that**
the controller (150) is arranged to determine that the battery (121) is not chargeable and in response to determining that the battery (121) is not chargeable, attempt charging of the battery (121) and reattempt charging of the battery (121); and
wherein if the controller (150) detects that the first connector (32) is connected to the second connector (102), the controller (150) attempts charging of the battery (121):
by determining that a voltage of the battery (121) detected by a voltage detection unit (174) is a full charging voltage or more; or
by determining that a value or an average value of a current of the battery (121) detected by a current detection unit (172) is a reference current value or less.

2. The vacuum cleaner according to claim 1, wherein the controller (150) comprises a charging switch (176) arranged to allow or cut off a flow of a charging current for charging the battery (121), and the charging switch (176) is switched on when the charging of the battery (121) is attempted.

3. The vacuum cleaner according to claim 2, wherein, the controller (150) is arranged to switch off the charging switch (176) after the attempt to charge the battery and wherein the reattempt to charge the battery comprises switching on the charging switch (176) again, after a predetermined time has passed.

4. The vacuum cleaner according to claim 3, wherein the controller (150) comprises the current detection unit (172) arranged to detect the current applied to the battery (121), wherein the switching off of the charging switch (176) is performed when the average value or the value of the current detected by the current detection unit (172) is less than the reference current value.

5. The vacuum cleaner according to claim 4, wherein, when the average value or the value of the current detected by the current detection unit (172) is more than the reference current value, the controller (150) is arranged to determine whether the battery (121) is fully charged, and finish the charging of the battery (121), when it is determined that the battery (121) is fully charged.

6. The vacuum cleaner according to claim 5, wherein the controller (150) is arranged to finish charging of the battery by switching off the charging switch (176).

7. The vacuum cleaner according to any preceding claim, wherein the controller (150) is arranged to repeatedly reattempt the charging of the battery (121) until it determines that the battery (121) is chargeable.

8. The vacuum cleaner according to any preceding claim, wherein the battery management system (180) comprises a switch (182) arranged to protect the battery (121) when the battery (121) has a predetermined temperature or more, and wherein the average value or the value of the current detected by the current detection unit (172) is the reference current value or less when the switch (182) is switched off.

9. The vacuum cleaner according to claim 8, wherein, when the switch (182) is switched on, the battery (121) is chargeable.

10. The vacuum cleaner according to any preceding claim, further comprising a charger (140) configured to apply a charging current to the battery (121) and thus to charge the battery (121), and provided in the cleaner body (10); and
a charging connector (30) having the first connector (32) and arranged to supply electric power to the second connector (102).

11. The vacuum cleaner according to any of claims 1 to 9, further comprising a charger (144) configured to apply a charging current to the battery (121) and having the first connector.

## Patentansprüche

1. Staubsauger, umfassend:
einen Staubsaugerkörper (10) mit einem Saugmotor, der dazu eingerichtet ist, eine Saugkraft zu erzeugen;
eine Saugeinheit (21), die dafür ausgelegt ist, mit dem Staubsaugerkörper (10) in Verbindung zu stehen und Luft und Staub aufzunehmen;
eine Batterie (121), die dafür ausgelegt ist, dem Saugmotor (160) elektrischen Strom zuzuführen;
ein Batterieverwaltungssystem (180), das dafür ausgelegt ist, einen Zustand der Batterie (121) zu erfassen;
einen zweiten Verbinder (102), der dazu eingerichtet ist, einen ersten Verbinder (32) zum Zuführen von elektrischem Strom zum Aufladen der Batterie (121) aufzunehmen; und
eine Steuerung (150), die dafür ausgelegt ist, das Aufladen der Batterie (121) zu steuern,
**dadurch gekennzeichnet, dass**
die Steuerung (150) dazu eingerichtet ist, festzustellen, dass die Batterie (121) nicht aufladbar ist, und als Reaktion auf die Feststellung, dass die Batterie (121) nicht aufladbar ist, zu versuchen, die Batterie (121) aufzuladen, und erneut zu versuchen, die Batterie (121) aufzuladen; und
wobei, wenn die Steuerung (150) erkennt, dass der erste Verbinder (32) mit dem zweiten Verbinder (102) verbunden ist, die Steuerung (150) versucht, die Batterie (121) zu laden:
indem festgestellt wird, dass eine von einer Spannungserfassungseinheit (174) erfasste Spannung der Batterie (121) eine Vollladungsspannung oder größer ist; oder
indem festgestellt wird, dass ein Wert oder ein Durchschnittswert eines Stroms der Batterie (121), der von einer Stromerfassungseinheit (172) erfasst wird, ein Referenzstromwert oder weniger ist.

2. Staubsauger nach Anspruch 1, wobei die Steuerung (150) einen Ladeschalter (176) umfasst, der dazu eingerichtet ist, einen Fluss eines Ladestroms zum Aufladen der Batterie (121) zuzulassen oder zu unterbrechen, und den Ladeschalter (176) einzuschalten, wenn versucht wird, die Batterie (121) zu laden.

3. Staubsauger nach Anspruch 2, wobei die Steuerung (150) dazu eingerichtet ist, den Ladeschalter (176) nach dem Versuch, die Batterie aufzuladen, auszuschalten, und wobei der erneute Versuch, die Batterie aufzuladen, das erneute Einschalten des Ladeschalters (176) umfasst, nachdem eine vorbestimmte Zeit vergangen ist.

4. Staubsauger nach Anspruch 3, wobei die Steuerung (150) die Stromerfassungseinheit (172) umfasst, die dazu eingerichtet ist, den der Batterie (121) zugeführten Strom zu erfassen, wobei das Ausschalten des Ladeschalters (176) durchgeführt wird, wenn der Durchschnittswert oder der Wert des von der Stromerfassungseinheit (172) erfassten Stroms kleiner als der Referenzstromwert ist.

5. Staubsauger nach Anspruch 4, wobei, wenn der Durchschnittswert oder der Wert des von der Stromerfassungseinheit (172) erfassten Stroms größer als der Referenzstromwert ist, die Steuerung (150) dazu eingerichtet ist, festzustellen, ob die Batterie (121) vollständig geladen ist, und das Aufladen der Batterie (121) zu beenden, wenn festgestellt wird, dass die Batterie (121) vollständig geladen ist.

6. Staubsauger nach Anspruch 5, wobei die Steuerung (150) dazu eingerichtet ist, den Ladevorgang der Batterie durch Ausschalten des Ladeschalters (176) zu beenden.

7. Staubsauger nach einem der vorhergehenden Ansprüche, wobei die Steuerung (150) dazu eingerichtet ist, das Aufladen der Batterie (121) wiederholt zu versuchen, bis sie feststellt, dass die Batterie (121) aufladbar ist.

8. Staubsauger nach einem der vorhergehenden Ansprüche, wobei das Batterieverwaltungssystem (180) einen Schalter (182) umfasst, der dazu eingerichtet ist, die Batterie (121) zu schützen, wenn die Batterie (121) eine vorbestimmte Temperatur oder mehr aufweist, und wobei der Durchschnittswert oder der Wert des von der Stromerfassungseinheit (172) erfassten Stroms der Referenzstromwert oder weniger ist, wenn der Schalter (182) ausgeschaltet ist.

9. Staubsauger nach Anspruch 8, wobei bei eingeschaltetem Schalter (182) die Batterie (121) aufladbar ist.

10. Staubsauger nach einem der vorhergehenden Ansprüche, ferner umfassend ein Ladegerät (140), das dafür ausgelegt ist, der Batterie (121) einen Ladestrom zuzuführen und somit die Batterie (121) aufzuladen, und das im Staubsaugerkörper (10) bereitgestellt ist; und einen Ladeanschluss (30), der den ersten Verbinder (32) aufweist und dazu eingerichtet ist, dem zweiten Verbinder (102) elektrischen Strom zuzuführen.

11. Staubsauger nach einem der Ansprüche 1 bis 9, ferner umfassend ein Ladegerät (144), das dafür ausgelegt ist, der Batterie (121) einen Ladestrom zuzuführen, und das den ersten Verbinder aufweist.

## Revendications

1. Aspirateur, comprenant :
un corps d'aspirateur (10) ayant un moteur d'aspiration agencé pour générer une force d'aspiration ;
une unité d'aspiration (21) configurée pour être en communication avec le corps d'aspirateur (10) et pour recevoir de l'air et de la poussière ;
une batterie (121) configurée pour fournir de l'énergie électrique au moteur d'aspiration (160) ;
un système de gestion de batterie (180) configuré pour détecter un état de la batterie (121) ;
un deuxième connecteur (102) agencé pour recevoir un premier connecteur (32) pour fournir de l'énergie électrique pour charger la batterie (121) ; et
un dispositif de commande (150) configuré pour commander la charge de la batterie (121),
**caractérisé en ce que**
le dispositif de commande (150) est agencé pour déterminer que la batterie (121) ne peut pas être chargée et en réponse à la détermination du fait que la batterie (121) ne peut pas être chargée, tenter la charge de la batterie (121) et retenter la charge de la batterie (121) ; et
dans lequel si le dispositif de commande (150) détecte que le premier connecteur (32) est connecté au deuxième connecteur (102), le dispositif de commande (150) tente la charge de la batterie (121) :
en déterminant qu'une tension de la batterie (121) détectée par une unité de détection de tension (174) est une tension de charge maximale ou plus ; ou
en déterminant qu'une valeur ou une valeur moyenne d'un courant de la batterie (121) détecté par une unité de détection de courant (172) est une valeur de courant de référence ou moins.

2. Aspirateur selon la revendication 1, dans lequel le dispositif de commande (150) comprend un commutateur de charge (176) agencé pour permettre ou couper un flux d'un courant de charge pour charger la batterie (121), et le commutateur de charge (176) est allumé lorsque la charge de la batterie (121) est tentée.

3. Aspirateur selon la revendication 2, dans lequel le dispositif de commande (150) est agencé pour éteindre le commutateur de charge (176) après la tentative de charge de la batterie et dans lequel la nouvelle tentative de charge de la batterie comprend le rallumage du commutateur de charge (176), après qu'une durée prédéterminée s'est écoulée.

4. Aspirateur selon la revendication 3, dans lequel le dispositif de commande (150) comprend l'unité de détection de courant (172) agencée pour détecter le courant appliqué à la batterie (121), dans lequel l'extinction du commutateur de charge (176) est réalisée lorsque la valeur moyenne ou la valeur du courant détecté par l'unité de détection de courant (172) est inférieure à la valeur de courant de référence.

5. Aspirateur selon la revendication 4, dans lequel, lorsque la valeur moyenne ou la valeur du courant détecté par l'unité de détection de courant (172) est supérieure à la valeur de courant de référence, le dispositif de commande (150) est agencé pour déterminer si la batterie (121) est entièrement chargée, et mettre fin à la charge de la batterie (121), lorsqu'il est déterminé que la batterie (121) est entièrement chargée.

6. Aspirateur selon la revendication 5, dans lequel le dispositif de commande (150) est agencé pour mettre fin à la charge de la batterie en éteignant le commutateur de charge (176).

7. Aspirateur selon l'une quelconque des revendications précédentes, dans lequel le dispositif de commande (150) est agencé pour retenter de manière répétée la charge de la batterie (121) jusqu'à ce qu'il détermine que la batterie (121) peut être chargée.

8. Aspirateur selon l'une quelconque des revendications précédentes, dans lequel le système de gestion de batterie (180) comprend un commutateur (182) agencé pour protéger la batterie (121) lorsque la batterie (121) a une température prédéterminée ou plus, et dans lequel la valeur moyenne ou la valeur du courant détecté par l'unité de détection de courant (172) est la valeur de courant de référence ou moins lorsque le commutateur (182) est éteint.

9. Aspirateur selon la revendication 8, dans lequel, lorsque le commutateur (182) est allumé, la batterie (121) peut être chargée.

10. Aspirateur selon l'une quelconque des revendications précédentes, comprenant en outre un chargeur (140) configuré pour appliquer un courant de charge à la batterie (121) et pour ainsi charger la batterie (121), et fourni dans le corps d'aspirateur (10) ; et
un connecteur de charge (30) ayant le premier connecteur (32) et agencé pour fournir de l'énergie électrique au deuxième connecteur (102).

11. Aspirateur selon l'une quelconque des revendications 1 à 9, comprenant en outre un chargeur (144) configuré pour appliquer un courant de charge à la batterie (121) et ayant le premier connecteur.
